# EUROPÄISCHE PATENTANMELDUNG

(11) **EP 3 056 951 A1**
(43) Veröffentlichungstag der Anmeldung: **17.08.2016**
(21) Anmeldenummer: 16151697.6
(22) Anmeldetag: 18.01.2016
(51) Int. Cl.: G05B 15/02

(54) **BETRIEBSVERFAHREN ZUM LASTMANAGEMENT EINER ANLAGE UND ZUGEHÖRIGER BETRIEBSMITTELAGENT**

(30) Priorität: 11.02.2015 DE 102015202412
(71) Anmelder: Siemens Aktiengesellschaft, 80333 München (DE)
(72) Erfinder: Mose, Christian, 83026 Rosenheim (DE); Weinert, Nils, 80798 München (DE)

(57) **Zusammenfassung**

Die Erfindung betrifft ein Betriebsverfahren zum Lastmanagement einer Anlage und einen zugehörigen Betriebsmittelagenten.

Der Betriebsmittelagent (BMA1) für mindestens ein Betriebsmittel (BM) innerhalb einer mehrere Komponenten umfassenden Anlage zum Lastmanagement derselben weist folgendes auf:
- Schnittstellenmittel zum Erhalt von Informationen zur Art und Anzahl der anstehenden Aufgaben mindestens eines dem Betriebsmittelagenten (BMA1) zugeordneten Betriebsmittels (BM),
- Schnittstellenmittel zum Erhalt von Informationen zum Ressourcenverbrauch des mindestens einen zugeordneten Betriebsmittels (BM) in verschiedenen Betriebs-zuständen und
- Kommunikationsmittel zum Austausch der erhaltenen Information mit anderen Betriebsmittelagenten (z.B. BMA2; BMAn) und/oder Komponenten der Anlage, um eine Prognose zur Leistungsaufnahme des mindestens einen zugeordneten Betriebsmittels (BM) für eine Zusammenführung derselben mit weiteren Prognosen der anderen Betriebsmittelagenten und/oder der Komponenten zu einem Summenlastprofil der Anlage im Zusammenhang mit dem Lastmanagement bereitzustellen.

## Beschreibung

Die Erfindung betrifft ein Betriebsverfahren zum Lastmanagement einer Anlage und einen zugehörigen Betriebsmittelagenten.

### Hintergrund der Erfindung

Die Erfindung liegt auf dem Gebiet der industriellen Fertigung. Es sind auch andere Anwendungen vor allem in der technischen Gebäudeausstattung denkbar.

Eine Anlage kann ein oder mehrere Produktionsmaschinen an einer Produktionsstätte umfassen. In der Regel wird ein Lastprofil insbesondere hinsichtlich der Energieaufnahme der zumindest einen Produktionsmaschine während eines Produktionsablaufs erstellt. Als Produktionsablauf ist ein Teil eines Produktionsprozesses zu verstehen. Damit kann als Produktionsablauf im weiteren Sinne jeder Teilprozess verstanden werden, der für die Produktion eines Produkts relevant ist.

Solche Produktionsmaschinen können in der industriellen Fertigung verwendet werden. Auch Automatisierungsanlagen genannt, werden solche Produktionsmaschinen zur automatisierten Herstellung von Produkten und zur automatisierten Durchführung von (Produktions-)Prozessen verwendet. Sie setzen sich, abhängig von den Anforderungen an die Anlage, aus sehr vielen kleinen und großen Komponenten zusammen. In diesen Komponenten werden die unterschiedlichsten Funktionalitäten, beispielsweise das Messen, Steuern, Regeln, die Bedienung der Komponenten über Schnittstellen und die Kommunikation zwischen den Komponenten und den Schnittstellen realisiert. Bei den Komponenten kann es sich um einzelne Maschinen, Fördereinheiten oder ganze Fertigungszellen mit innerer Struktur handeln. Zwischen diesen Komponenten bestehen Abhängigkeiten, die beispielsweise vorschreiben, dass eine bestimmte Komponente erst ein- oder abgeschaltet werden kann, wenn eine oder mehrere andere Komponenten sich in einem definierten Betriebszustand befinden. Solche Betriebszustände können das Hochlaufen, Warmlaufen, einen Wartezustand, Bearbeitungszustand oder Abschaltvorgang einer oder mehrere Komponenten umfassen. Die Freiheitsgrade der einzelnen Betriebszustände, die zur Anpassung der Leistungsaufnahme des Betriebsmittels innerhalb des jeweiligen Betriebszustands verwendet werden können, sind demnach begrenzt.

Die Menge der zu einem Zeitpunkt benötigten Energie bzw. somit aufgenommenen Leistung hängt dabei vom jeweils eingenommenen Betriebszustand ab. Bei der Bearbeitung einer Produktionsaufgabe werden typischerweise mehrere Betriebszustände durchlaufen, so dass ein sich über die Zeit veränderliches Lastprofil entsteht.

Die Erfassung von Verbrauchswerten, vor allem von Energieverbrauchswerten, in Produktionsanlagen gewinnt zunehmend an Bedeutung, da als Voraussetzung für effektive Einsparmaßnahmen die Identifikation von Potentialen wichtig ist. Dies betrifft sowohl die Höhe der Leistungsaufnahme einzelner Verbraucher oder Gruppen von Verbrauchern als auch den absoluten Energieverbrauch dieser Produktionsanlagen während bestimmter Zeitperioden der Produktion oder produktionsfreier Zeiten. Für eine entsprechende Analyse ist neben der Erfassung des Energieverbrauchs auch die Erfassung von Prozessabläufen und Betriebszuständen erforderlich. Nur durch die Korrelation von Betriebs- und Prozessinformationen mit Energieverbrauchsdaten ist eine genaue Bewertung des Energieverbrauchs von Produktionsanlagen möglich.

Da in einem typischen Produktionsumfeld zeitgleich eine Vielzahl unterschiedlicher Betriebsmittel bzw. Maschinen und Anlagen im Betrieb ist, ergibt sich insgesamt für einen Produktionsstandort bzw. eine Produktionsstätte ein Gesamt-Lastprofil, das die Summe der Leistungsaufnahme der am Produktionsstandort betriebenen einzelnen Betriebsmittel darstellt (Summe der einzelnen Lastprofile). Eine wirtschaftliche Produktion strebt - wie oben bereits erläutert - die Vermeidung bzw. Begrenzung von Spitzenlasten an.

Es ist möglich, sogenannte Lastabwurfsysteme einzusetzen, die im Falle des Erreichens eines nichtzulässigen Spitzenlastwertes einzelne, vorher definierte bzw. freigegebene Verbraucher abschalten. Dabei werden die aktuellen Gesamtlastwerte gemessen und für die Abschaltentscheidung herangezogen. Die Abschaltentscheidung wird entweder auf Basis des aktuellen Messwerts oder auf Basis eines kurzfristigen Prognosewertes, der aus dem aktuellen Messwert berechnet wird, getroffen. Während herkömmliche Systeme "binär", also nach dem Prinzip "an" oder "aus" arbeiten, nutzen moderne Implementierungen auch Zwischenzustände wie z.B. einen Teillastbetrieb einzelner Betriebsmittel bzw. Verbraucher zur Begrenzung der Gesamtlast.

Standardisierte Lösungen ein Energie- bzw. Lastmanagement solcher Produktionsstätten sind bisher jedoch nicht bekannt.

Ausgehend von diesem Stand der Technik ist es Aufgabe der Erfindung, ein verbessertes Lastmanagement für eine Anlage beispielhaft der oben genannten Art zu schaffen.

### Darstellung der Erfindung

Diese Aufgabe wird durch die unabhängigen Ansprüche gelöst. Vorteilhafte Weiterbildungen sind Gegenstand der abhängigen Ansprüche.

Die Erfindung beansprucht einen Betriebsmittelagenten für mindestens ein Betriebsmittel innerhalb einer Anlage zum Lastmanagement derselben. Der Betriebsmittelagent weist folgende Mittel auf:
- Schnittstellenmittel zum Erhalt von Informationen zur Art und Anzahl der anstehenden Aufgaben mindestens eines dem Betriebsmittelagenten zugeordneten Betriebsmittels,
- Schnittstellenmittel zum Erhalt von Informationen zum Ressourcenverbrauch des mindestens einen zugeordneten Betriebsmittels in verschiedenen Betriebszuständen und
- Kommunikationsmittel zum Austausch der erhaltenen Information mit anderen Betriebsmittelagenten und/oder Komponenten der Anlage, um eine Prognose zur Leistungsaufnahme des mindestens einen zugeordneten Betriebsmittels für eine Zusammenführung derselben mit weiteren Prognosen der anderen Betriebsmittelagenten und/oder der Komponenten zu einem Summenlastprofil der Anlage im Zusammenhang mit dem Lastmanagement bereitzustellen.

Die Anlage ist vorzugsweise technisch ausgebildet und kann dabei mehrere Komponenten wie z.B. andere Betriebsmittelagenten, weitere Agenten einer anderen Art beispielsweise Datenbankagenten oder Ressourcenverwaltungsagenten, Steuerungen und Betriebsmittel umfassen. Der Ressourcenverbrauch kann insbesondere den Energieverbrauch betreffen.

Ein sogenannter Agent besteht aus Hardware- und/oder Softwareeinheiten, die den Agenten zu einem gewissem eigenständigem und eigendynamischem (autonomem) Verhalten befähigen. Das bedeutet, dass abhängig von verschiedenen Zuständen (Status) ein bestimmter Verarbeitungsvorgang abläuft, ohne dass von außen ein weiteres Startsignal gegeben wird oder während des Vorgangs ein äußerer Steuerungseingriff erfolgt.
Ein solcher Betriebsmittelagent kann mit ein oder mehreren Betriebsmitteln verbunden sein und rein hardwaremäßig ausgestaltet sein. Er kann jedoch auch eine Kombination aus Hardware- und Softwareeinheiten aufweisen. Die Hardwareeinheiten sind dabei so ausgeprägt, dass sie jeweils oder gemeinsam eine Konnektivitätsschnittstelle zur Kopplung mit dem mindestens einen Betriebsmittel aufweisen, wobei die Kopplung indirekt über eine Steuerung mit dem mindestens eines Betriebsmittels oder direkt mit dem mindestens einen Betriebsmittel ausgebildet sein kann. Diese Konnektivitätsschnittstelle kann im Zusammenspiel mit Softwareeinheiten eine Art "Plug & Play"-Funktionalität umfassen, die eine hardwaremäßige Kopplung mit der Steuerung bzw. mit dem mindestens einen Betriebsmittel ermöglicht.

Somit ist ein Betriebsmittelagent ohne bzw. nur mit geringen Anpassungen in bestehende Anlagen integrierbar.

Eine Ausführungsform des Betriebsmittelagenten sieht Mittel zur Bestimmung der Prognose zur Leistungsaufnahme des mindestens einen Betriebsmittels, wobei die Leistungsaufnahme abhängig vom Betriebszustand des Betriebsmittels und von der Art und Anzahl der anstehenden Aufgaben ist.

Es wird mittels des Betriebsmittelagenten ein Austausch von Informationen unter den Betriebsmittelagenten hinsichtlich der Art und Anzahl der anstehenden Aufgaben eines den jeweiligen Betriebsmittelagenten zugeordneten Betriebsmittel und ein Austausch von Informationen zum Ressourcenverbrauch z.B. den Energieverbauch des genannten Betriebsmittels in verschiedenen Betriebszuständen ermöglicht. Dadurch kann auch die von den Betriebsmittelagenten bestimmten Prognosen unter den Betriebsmittelagenten ausgetauscht werden, die letztendlich zu einem Summenlastprofil für das Lastmanagement der Anlage zusammengeführt bzw. zusammengefasst werden können.

Der Informationsaustausch über Prognose(-daten) und/oder Lastprofile kann mittels eines standardisierten Übertragungsprotokoll bzw. mittels standardisierter Datenformate erfolgen und ist somit betriebsmittel- bzw. anwendungsneutral.

Demnach ist eine Systemarchitektur der Anlage vorgesehen, bei der die erforderliche Analysen und Entscheidungen dezentral und nicht zentral ausgeführt/getroffen werden.

Eine Weiterbildung der Erfindung sieht weitere Kommunikationsmittel vor, die, wenn das Summenlastprofil eine vorgegebene Maximallast erreicht und/oder überschreitet, die Abgabe von lastregulierenden Maßnahmen dem zugeordneten Betriebsmittel (BM) zuleiten und/oder lastregulierende Informationen hinsichtlich solcher Maßnahmen an die anderen Betriebsmittelagenten (BMA2; BMAn) kommunizieren können.

Eine Ausführungsform der Erfindung sieht vor, dass die lastregulierenden Maßnahmen und/oder lastregulierenden Informationen abhängig von den jeweiligen Freiheitsgraden hinsichtlich der Leistungsaufnahme des zugeordneten Betriebsmittels und/oder der den anderen Betriebsmittelagenten zugeordneten Betriebsmittel sind.

Die bestimmte Prognose können zudem die Prognosegüte und/oder Anpassungsaufwände der lastregulierenden Maßnahmen umfassen.

Erforderliche Lastprognosen zur Einhaltung vorgegebener Spitzenlasten basieren somit auf Produktionsaufgaben - also auf Planungsdaten, nicht auf aktuellen Messwerten -, wodurch eine vorausschauende anstatt reaktive Anpassung durch lastregulierende Maßnahmen ermöglicht wird.

Ein weiterer Aspekt der Erfindung ist eine Anlage mit mindestens einem Betriebsmittelagenten nach der oben beschriebenen Art, die mindestens eine der folgenden Komponenten umfassen kann:
- eine Automatisierungsanlage,
- eine Fertigungsanlage,
- eine Produktionsanlage,
- eine Maschine,
- ein Energienetz,
- ein Stromverteilungsnetz,
- ein Lastverteilungsnetz.

Ein weiterer Aspekt der Erfindung ist ein Betriebsverfahren zum Lastmanagement für ein solches Betriebsmittel bzw. für eine solche Anlage.

Das Betriebsverfahren kann wie der oben beschriebene Betriebsmittelagent entsprechend weitergebildet werden.

Ein weiterer Aspekt der Erfindung ist ein Computerprogram bzw. eine Computerprogrammprodukt mit Mitteln zur Durchführung des vorstehend genannten Betriebsverfahrens und dessen Ausführungsformen, wenn das Computerprogramm(-produkt) in einem Betriebsmittelagenten der vorstehend genannten Art zur Ausführung gebracht wird.

Ein bzw. mehrere Ausführungsbeispiele der Erfindung

Weitere Vorteile, Einzelheiten und Weiterbildungen der Erfindung ergeben sich aus der nachfolgenden Beschreibung von Ausführungsbeispielen in Verbindung mit den Zeichnungen.

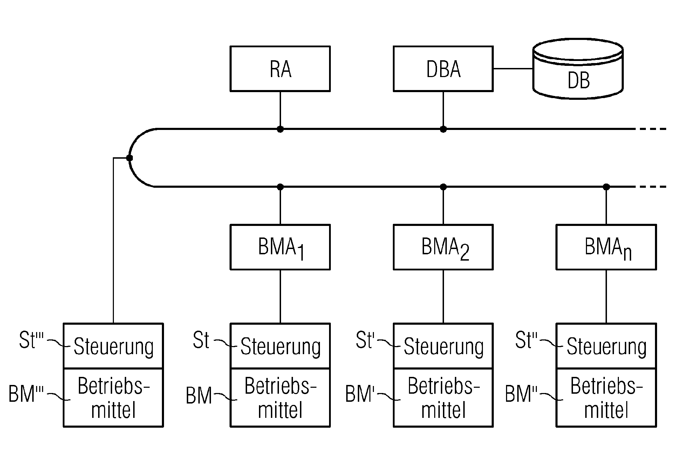

Es zeigt
die Figur ein Beispiel für eine dezentrale Systemarchitektur zum Informationsaustausch über Lastprofile unter den Betriebsmitteln.

In der Figur ist eine Produktionsanlage dargestellt, das aus mehreren Komponenten besteht, die alle beispielsweise zur Erzeugung eines bestimmten Produkts erforderlich sind. Zur Steuerung der Produktionsanlage gibt es Steuerungen St, St', St" und St'''. Die Steuerungen St, St', St", ST"' stehen jeweils mit Betriebsmitteln BM, BM', BM" und BM'" z.B. Produktionsmaschinen, TBS-Einrichtungen (technical Building Services bzw. auf Deutsch: Technische Gebäudeausrüstung) etc. in Verbindung. Solche Einrichtungen können Heizung, Klimatechnik, Energieversorgung, Medienversorgung, Beleuchtung, Entsorgung inklusive der dafür jeweils erforderlichen Anlagentechnik sein. Im Falle eines energetischen Lastmanagements wird zudem eine in der Figur nicht dargestellte Energieversorgung zur Verfügung gestellt, welche die Komponenten über Versorgungsleitungen mit elektrischer Energie versorgt.

Um ein Produkt in der Produktionsanlage herstellen zu können, ist eine Datenbank DB mit Produktionsparametern für das herzustellende Produkt vorgesehen. Die Datenbank DB steht mit einem Datenbank-Agenten DBA, z.B. ein Rechner, eine Rechnerplatine oder auch ein Softwaremodul, in Verbindung und ist über ein Kommunikationsnetz K jeweils mit Betriebsmittelagenten BMA1, BMA2 bis BMAn, die jeweils mit den Steuerungen St, St', St" für die jeweils zugeordneten Betriebsmittel BM, BM', BM" verbunden sind, so dass die Steuerungen über die empfangenden Produktionsparametern Steuerbefehle an die Betriebsmittel leiten können. Optional kann mit dem Kommunikationsnetz K ein Ressourcenverwaltungsagent RA in Verbindung stehen. Der Ressourcenverwaltungsagent stellt Informationen bzgl. der Verfügbarkeit von Ressourcen zur Verfügung. Diese Informationen erhält er über die Steuerungen St, St', St" und St'" von den Betriebsmitteln BM, BM', BM"' und BM"'. Es ist möglich, dass - wie in der Figur gezeigt - Steuerung und Betriebsmittel ohne Betriebsmittelagenten in der Anlage vorhanden sind. Dies ist vor allem bei älteren Anlagen der Fall, bei denen ggf. nur an den für die Lastverteilung entscheidenden Betriebsmitteln Betriebsmittelagenten eingesetzt werden.

Die Betriebsmittelagenten BMA1 bis BMAn übernehmen das Aushandeln einer für das jeweilige Betriebsmittel im Sinne des Gesamtlastprofils zulässige Leistungsaufnahme. Die Betriebsmittelagenten verfügen hierfür über Schnittstellen, die es ihnen erlauben Informationen zur Art und Anzahl der anstehenden zukünftigen (Produktions-)aufgaben des jeweiligen Betriebsmittels zu erhalten und daraus unter Verwendung zuvor ermittelter und gespeicherter Informationen zum Energieverbrauch in einzelnen Betriebszuständen eine Prognose der Leistungsaufnahme des Betriebsmittels zu bestimmten bzw. zu berechnen. Die Betriebsmittelagenten verfügen weiterhin über Informationen über Freiheitsgrade der einzelnen Betriebszustände, die zur Anpassung der Leistungsaufnahme des Betriebsmittels innerhalb des jeweiligen Betriebszustands verwendet werden können.

Die einzelnen Betriebsmittelagenten können als eigenständige Hardwareagenten (z.B. Rechner) ausgestaltet sein, die über standardisierte, vorzugsweise als 1/O-Schnittstellen ausgestalte, Hardware- und/oder Software-Schnittstellen für gängige Kommunikationsnetze K (z.B. Ethernet, Feldbustypen) sowie über Steuerungs-Kommunikationssysteme verfügen. Damit können sie typischerweise eine vorhandene Kommunikationsnetz-Infrastruktur nutzen und unterschiedliche Steuerungen abdecken bzw. erweitern. Sie können auch als Softwareagenten in Form von Softwaremodulen/-einheiten ausgestaltet sein, die auf einer bestehenden IT-Infrastruktur ausgeführt werden und die gleichen Aufgaben übernehmen können.

Die Betriebsmittelagenten können mit anderen Betriebsmittelagenten über das Kommunikationsnetzt K in Kontakt treten, um die prognostizierten Lastprofile auszutauschen und auf Einhaltung von Zielvorgaben hinsichtlich des Summenlastprofils zu überprüfen (z.B. Einhalten einer Maximallast, Abfahren eines vorgegebenen Profils). Im Falle der Verletzung der Zielvorgaben können die jeweils beteiligten Betriebsmittel unter Nutzung der jeweiligen Freiheitsgrade der Betriebsmittel eine Leistungsaufnahme aller Betriebsmittel so abstimmen, dass die Zielverletzung vermieden wird. Hierzu können die Betriebsmittelagenten die Abgabe von lastregulierenden Maßnahmen wie z.B. Steuerbefehle an das ihnen zugeordnete Betriebsmittel einleiten und/oder lastregulierende Informationen hinsichtlich solcher Maßnahmen an die anderen Betriebsmittelagenten kommunizieren.

Zwischen den Betriebsmittelagenten können außerdem energetischer Informationen ausgetauscht werden.

Solche Informationen können prognostizierte Lastprofile, ggf. Informationen zur Prognosegüte und/oder zu Anpassungsaufwänden der lastregulierenden Maßnahmen umfassen, jedoch nicht zu Prozessdaten im Sinne von Auftragsdaten oder Maschinenprogrammen.

Solche Informationen können zudem Informationen umfassen, die über den komponentenspezifischen Leistungsaufnahmeverlauf für jede Komponente entweder vorbekannt sind, beispielsweise durch mittels des Herstellers mitgelieferter Informationen. Alternativ dazu, und beispielsweise wenn man mit veränderter Energieaufnahme zu verschiedenen Zeitpunkten rechnet (etwa über die Lebensdauer der Anlagen-Komponente wegen Verschleiß) kann die Information über den komponentenspezifische Leistungsaufnahmeverlauf für jede Komponente ermittelt werden. Hier sind verschiedene Möglichkeiten denkbar, beispielweise eine initiale Messung nach dem Einbau, eine Messung zum Zeitpunkt der Durchführung des Verfahrens oder wiederholte Messungen und Bildung eines Durchschnittswerts.

Die so ermittelte Gesamt-Leistungsaufnahme kann mit einer zulässigen Maximallast (Energieaufnahme) verglichen werden. Eine Überschreitung des Vergleichswerts kann visuell in geeigneter Weise (beispielsweise farbig) hervorgehoben werden. Bei der zulässigen Maximallast kann es sich auch um einen dynamischen Wert handeln, welcher zeitpunktabhängig ist.

Jedes ins Lastmanagement eingebundene Betriebsmittel wird so über sein individuelles Lastprofil eingebunden, so dass unterschiedliche Betriebsmittel durch ein einheitliches bzw. standardisierte Datenformat repräsentiert und somit kombiniert werden können.

In der Produktionsanlage sind die einzelnen Betriebsmittel BM, BM', BM" zweckmäßigerweise mit jeweils einem Betriebsmittelagenten versehen, und die Kommunikationsfähigkeit der Betriebsmittelagenten untereinander zu ermöglichen und zu vereinfachen. Die Betriebsmittelagenten melden sich in der Regel selbstständig im Komponentenverbund der Produktionsanlage z.B. über eine Konnektivitätsschnittstelle beispielsweise in Form eines "Plug&Play" an und treten in die Aushandlung des Gesamtlastprofils ein.

Durch die Plug&Play-artige Integration des Betriebsmittelagenten in die gesamte Anlage wird eine Reduzierung des Informationsaustauschs auf Lastprofile erreicht. Auch ist keine eigenständige Auslegung und Parametrierung der gesamten Anlage, sondern nur seiner einzelnen Komponenten notwendig. Dies ist anwendungsneutral und reduziert die Komplexität bei der Integration.

Um über die erforderlichen Informationen verfügen zu können, ist es zweckmäßig, den jeweiligen Betriebsmittelagenten eines Betriebsmittels für dieses zu parametrieren, d.h. eine Definition von Betriebszuständen, Ermittlung und Speicherung der Leistungsaufnahme in den Betriebszuständen sowie eine Definition der Freiheitsgrade der Betriebszustände zu hinterlegen. Nicht zwingend erforderlich ist hingegen eine zentrale Definition von Regeln für die Anpassung des Gesamtlastprofils im Falle einer Verletzung der Zielvorgaben, da dies durch die jeweiligen Fähigkeiten eines Betriebsmittelagenten dezentral vorgenommen wird.

In einer Ausführungsform der Konnektivitätsschnittstelle ist auch eine visuelle Auswertung oben genannten Informationen möglich. So kann eine Kamera, die auf ein Display des Betriebsmittels bzw. dessen Steuerung gerichtet ist, ausreichend sein, um die genannten Informationen vom Display abzulesen und auszuwerten. Diese Ausführungsform kann bei schon älteren bestehenden Anlagen sinnvoll sein, bei denen eine vollständige Integration der Konnektivitätsschnittstelle weder hardware- noch softwaremäßig nicht möglich ist.

Bei einem Aus-/Nachrüsten bestehender Betriebsmittel mit einem solchen Betriebsmittelagenten bzw. mit dem Betriebsverfahren ist nur die lokal Betrachtung des ausgerüsteten Betriebsmittels, jedoch keine Betrachtung der gesamten komplexen Anlage erforderlich.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsmittelagent (BMA1) für mindestens ein Betriebsmittel (BM) innerhalb einer mehrere Komponenten umfassenden Anlage zum Lastmanagement derselben aufweisend:
- Schnittstellenmittel zum Erhalt von Informationen zur Art und Anzahl der anstehenden Aufgaben mindestens eines dem Betriebsmittelagenten (BMA1) zugeordneten Betriebsmittels (BM),
- Schnittstellenmittel zum Erhalt von Informationen zum Ressourcenverbrauch des mindestens einen zugeordneten Betriebsmittels (BM) in verschiedenen Betriebszuständen und
- Kommunikationsmittel zum Austausch der erhaltenen Information mit anderen Betriebsmittelagenten (z.B. BMA2; BMAn) und/oder Komponenten der Anlage, um eine Prognose zur Leistungsaufnahme des mindestens einen zugeordneten Betriebsmittels (BM) für eine Zusammenführung derselben mit weiteren Prognosen der anderen Betriebsmittelagenten und/oder der Komponenten zu einem Summenlastprofil der Anlage im Zusammenhang mit dem Lastmanagement bereitzustellen.

2. Betriebsmittelagent (BMA1) nach dem vorhergehenden Anspruch, **gekennzeichnet durch** Mittel zur Bestimmung der Prognose zur Leistungsaufnahme des mindestens einen Betriebsmittels (BM), wobei die Leistungsaufnahme abhängig vom Betriebszustand des Betriebsmittels und von der Art und Anzahl der anstehenden Aufgaben ist.

3. Betriebsmittelagent (BMA1) nach einem der vorhergehenden Ansprüche, **dadurch gekennzeichnet, dass** die Kommunikationsmittel so ausgestaltet sind, dass der Austausch der bestimmten Prognose mittels eines standardisierten Übertragungsprotokolls erfolgt.

4. Betriebsmittelagent (BMA1) nach einem der vorhergehenden Ansprüche, **gekennzeichnet durch** eine Konnektivitätsschnittstelle zur Kopplung mit dem mindestens einem zugeordneten Betriebsmittel.

5. Betriebsmittelagent (BMA1) nach einem der vorhergehenden Ansprüche, **gekennzeichnet durch** weitere Kommunikationsmittel, die, wenn das Summenlastprofil eine vorgegebene Maximallast erreicht und/oder überschreitet, die Abgabe von lastregulierenden Maßnahmen dem zugeordneten Betriebsmittel (BM) zuleiten und/oder lastregulierende Informationen hinsichtlich solcher Maßnahmen an andere Betriebsmittelagenten (z.B. BMA2; BMAn) und/oder Komponenten kommunizieren können.

6. Betriebsmittelagent (BMA1) nach dem vorhergehenden Anspruch, **dadurch gekennzeichnet, dass** die lastregulierenden Maßnahmen und/oder lastregulierenden Informationen abhängig von den jeweiligen Freiheitsgraden hinsichtlich der Leistungsaufnahme des zugeordneten Betriebsmittels (BM) und/oder der den anderen Betriebsmittelagenten (BMA2; BMAn) zugeordneten Betriebsmittel (BM'; BM") sind.

7. Betriebsmittelagent (BMA1) nach einem der vorhergehenden Ansprüche, **dadurch gekennzeichnet, dass** die bestimmte Prognose zudem die Prognosegüte und/oder Anpassungsaufwände der lastregulierenden Maßnahmen umfassen.

8. Anlage mit mindestens einem Betriebsmittelagenten nach einem der vorherigen Ansprüche.

9. Anlage nach dem vorhergehenden Anspruch, die mindestens eine der folgenden Komponenten umfasst:
- eine Automatisierungsanlage,
- eine Fertigungsanlage,
- eine Produktionsanlage,
- eine Maschine,
- ein Energienetz,
- ein Stromverteilungsnetz,
- ein Lastverteilungsnetz.

10. Betriebsverfahren für einen Betriebsmittelagenten (BMA1) zum Lastmanagement einer mehrere Komponenten umfassenden Anlage aufweisend folgende Schritte:
- Erhalten von Informationen hinsichtlich der Art und Anzahl der anstehenden Aufgaben eines dem Betriebsmittelagenten (BMA1) zugeordneten Betriebsmittels (BM) und
- Erhalten von Informationen zum Ressourcenverbrauch des dem Betriebsmittelagenten (BMA1) zugeordneten Betriebsmittels (BM) in verschiedenen Betriebszuständen,
- Austausch der erhaltenen Informationen zwischen dem Betriebsmittelagenten (BMA1) und den anderen Betriebsmittelagenten (BMA2; BMAn) und/oder Komponenten der Anlage, um eine Prognose zur Leistungsaufnahme des mindestens einen zugeordneten Betriebsmittels (BM) für eine Zusammenführung derselben mit weiteren Prognosen der anderen Betriebsmittelagenten und/oder der Komponenten zu einem Summenlastprofil der Anlage im Zusammenhang mit dem Lastmanagement bereitzustellen.

11. Betriebsverfahren nach dem vorhergehenden Anspruch, **dadurch gekennzeichnet, dass** die Prognose zur Leistungsaufnahme des zugeordneten Betriebsmittels (BM) bestimmt wird, wobei die Leistungsaufnahme abhängig vom Betriebszustand des Betriebsmittels (BM) und von der Art und Anzahl der anstehenden Aufgaben ist.

12. Betriebsverfahren nach einem der vorhergehenden Ansprüche, **dadurch gekennzeichnet, dass**, wenn das Summenlastprofil eine vorgegebene Maximallast erreicht und/oder überschreitet, die Abgabe von lastregulierenden Maßnahmen dem zugeordneten Betriebsmittel (BM) zugeleitet und/oder lastregulierende Informationen hinsichtlich solcher Maßnahmen an die anderen Betriebsmittelagenten (BMA2; BMAn) kommuniziert werden.

13. Betriebsverfahren nach dem vorhergehenden Anspruch, **dadurch gekennzeichnet, dass** die lastregulierenden Maßnahmen und/oder lastregulierenden Informationen von den jeweiligen Freiheitsgraden hinsichtlich der Leistungsaufnahme des zugeordneten Betriebsmittels (BM) und/oder der den anderen Betriebsmittelagenten (BMA2; BMAn) zugeordneten Betriebsmittel (BM'; BM") abhängen.

14. Betriebsverfahren nach einem der vorhergehenden Ansprüche, **dadurch gekennzeichnet, dass** die bestimmte Prognose zudem die Prognosegüte und/oder Anpassungsaufwände der lastregulierenden Maßnahmen umfassen.

15. Computerprogrammprodukt mit Mitteln zur Durchführung des Betriebsverfahrens nach einem der vorgenannten Verfahrensansprüche, wenn das Computerprogrammprodukt in einem Betriebsmittelagenten, insbesondere nach einem der vorgenannten Vorrichtungsansprüche, zur Ausführung gebracht wird.
